# EUROPÄISCHE PATENTSCHRIFT

(11) **EP 0 961 960 B1**
(45) Veröffentlichungstag und Bekanntmachung des Hinweises auf die Patenterteilung: **31.10.2001**
(21) Anmeldenummer: 98912342.7
(22) Anmeldetag: 19.02.1998
(51) Int. Cl.: G06F 1/00, G06K 11/18

(54) **BERÜHRUNGSLOSES ANMELDESYSTEM FÜR COMPUTER**
CONTACTLESS LOG-ON SYSTEM FOR COMPUTERS
SYSTEME DE DEMANDE DE CONNEXION SANS CONTACT POUR ORDINATEUR

(30) Priorität: 19.02.1997 DE 19706494
(43) Veröffentlichungstag der Anmeldung: 08.12.1999
(73) Patentinhaber: Mobiltrading & Financing Anstalt, 9493 Mauren (LI)
(72) Erfinder: GSTÖHL, Anton, FL-9496 Balzers (LI)
(74) Vertreter: Strych, Werner Maximilian Josef, Dr.
(86) Internationale Anmeldenummer: EP9800964
(87) Internationale Veröffentlichungsnummer: WO9839702

(56) Entgegenhaltungen:
- EP-A- 0 295 985
- EP-A- 0 496 344
- DE-C- 4 015 482
- GB-A- 2 265 482
- US-A- 5 361 062

## Beschreibung

Die Erfindung betrifft ein berührungsloses Anmeldesystem für Computer, insbesondere zur Identifikation des Benutzers, mit einem Datenträger als Speichermedium für ein Paßwort (Identifikationscode) und einer Übertragungseinrichtung, um auf den Computer Zugriff zu erhalten.

Bei modernen Betriebssystemen wie z. B. WINDOWS NT, WINDOWS 95, NOVELL, UNIX usw. ist eine Anmeldung mit Benutzemame und Paßwort nötig, um auf den Computer Zugriff zu erhalten. Darüber hinaus sind für viele wissenschaftliche Programme oder bei der Bearbeitung vertraulicher Informationen, wie z. B. Telebanking, weitere Paßworte erforderlich. In der Praxis ist es deshalb fast unmöglich, sich alle Paßwörter zu merken und auf Dauer völlig geheim zu halten.

Von verschiedenen Systemherstellern werden daher Anmeldevorrichtungen angeboten, die mit Magnetkarten bzw. Kontaktchipkarten arbeiten und die Identifikation am Computer erleichtern. Diese Systeme setzen jedoch in der Regel einen Umbau des Computers oder eine Erweiterung desselben voraus.

Das Risiko bei derartigen Systemen besteht darin, daß jede Person, die im Besitz der Anmeldekarte ist, auf den Computer zugreifen kann. Bei den bekannten kartenförmigen Datenträgern besteht eine relativ hohe Gefahr des Verlusts bzw. des Mißbrauchs durch Dritte, da derartige Datenträger relativ leicht vergessen, verloren oder entwendet werden können.

Ein solches System ist in der DE 43 26 735 A1 offenbart, das der Sicherung einer Rechneranlage gegen unbefugten Zugriff dient. Dabei ist im Gehäuse einer Maus eine Chipkarten-Leseeinrichtung angeordnet, so daß kein gesondertes Gerät erforderlich ist, um einen Anmeldevorgang durchzuführen. Diese Anordnung hat jedoch die oben genannten Nachteile, wie z. B. der Verlust der Chipkarte.

Aus der JP-Patentanmeldung Nr. 5-41 226 ist ein Computer-Sicherheitssystem bekannt, das berührungslos arbeitet und den Zugriff zum Computer sperrt, wenn sich der Benutzer vom Arbeitsplatz entfernt. Das System umfaßt einen Transponder, der in dem Namensschild, Ausweis o. dgl. des Benutzers eingebaut ist und der einen Identifikationscode an eine Empfangseinrichtung aussendet. Die Empfangseinrichtung ist als eigenständiges Gerät gebildet, das zum externen Anschluß an eine eigene, bereits vorhandene Schnittstelle des Computers vorgesehen ist. Neben dem zum Aufstellen des Zusatzgerätes erforderlichen Platzbedarf wird zusätzlich eine eigene Schnittstelle belegt, die somit nicht mehr für andere Geräte und Einrichtungen zur Verfügung steht.

Das europäische Patent EP-A-0496 344 offenbart ein Computer-Anmeldesystem nach dem Oberbegriff des Patentanspruchs 1. Bei diesem System ist die Erfassungseinrichtung als eine sich im wesentlichen flächig erstreckende Antenne ausgebildet, die in einem Belag bzw. einer Unterlage der Tastatur angeordnet ist Die hier aufgezeigte Lösung umfaßt mit dieser Unterlage eine weiteres zusätzliches Teil, für das außerdem eine zusätzliche Schnittstelle eingerichtet werden muß.

Auch aus der DE 40 15 482 C1 ist ein gattungsgemäßes System zur Identifikation von Benutzern an Computern bekannt. Bei diesem ist die Erfassungseinrichtung, die das von der Sendeeinrichtung ausgesendete Identifikationssignal empfängt, beispielsweise in einer Schreibtischunteflage eingearbeitet. Die Erfassungseinrichtung ist dabei an einer elektronischen Baugruppe angeschlossen, die als spezielle Prozessorkarte einschließlich des zugehörigen Sicherheitsprogramms einen eigenen Steckplatz des Computers belegt.

Es ist daher die Aufgabe gemäß der vorliegenden Erfindung, ein berührungsloses Anmeldesystem für Computer zu schaffen, das möglichst preisgünstig nachrüstbar ist, und keinen zusätzlichen Platz benötigt. Es ist ferner die Aufgabe der vorliegenden Erfindung, ein möglichst einfaches berührungsloses Anmeldeverfahren zu schaffen, das hohe Sicherheit bietet.

Gelöst wird diese Aufgabe durch die in den unabhängigen Ansprüchen angegebenen Merkmale.

Das erfindungsgemäße Computer-Anmeldesystem umfaßt ein berührungsloses Übertragungssystem, vorzugsweise ein Transpondersystem, mittels dem ein Identifikationscode berührungslos an eine Code-Erfassungseinrichtung übertragen wird. Die Erfassungseinrichtung ist dabei erfindungsgemäß in einem Computer-Ein-/Ausgabegerät oder in einer Mausunterlage angeordnet und in eine Schnittstelle des Computers eingeschleift, so daß keine zusätzliche Schnittstelle des Computers belegt werden muß. Ein derartig bestücktes Computer-Ein-/Ausgabegerät, wie z. B. eine Tastatur oder eine Maus, und insbesondere eine solche Mausunterlage können preisgünstig nachgerüstet werden.

Das erfindungsgemäße Anmeldesystem umfaßt ferner einen berührungslosen Datenträger, welcher vorzugsweise an oder in einer Uhr untergebracht ist, und eine Code-Erfassungseinrichtung - vorzugsweise eine Sende-/Empfangs-Antenne - welche am Rechner angeschlossen ist und mit dem Datenträger berührungslos kommuniziert. Zur Identifikation des Benutzers wird der am Handgelenk befindliche berührungslose Datenträger in den Einflußbereich der Antenne gebracht, indem er in die Nähe der Antenne geführt wird. Das im Datenträger eingebaute Übertragungssystem, z. B. ein Transponder, wird durch das Feld der Antenne aktiviert und sendet dadurch den Identifikationscode aus. Die Antenne empfängt daraufhin das Anmeldesignal (Identifikationscode), welches in den Computer übertragen wird. Damit ist die Anmeldung beendet.

Das erfindungsgemäße Übertragungssystem im Datenträger kann jede beliebige drahtlose Übertragungstechnik nutzen. So kann z. B. auch eine Infrarotübertragung, eine Ultraschallübertragung u. dgl. vorgesehen sein, mit jeweils geeigneten Sende- und Erfassungseinrichtungen.

Der erfindungsgemäße Datenträger enthält ein Speichermedium, in dem der Identifkationscode gespeichert ist, wobei vorzugsweise ein laserprogrammierter Speicher eingesetzt wird. Die programmierte Information kann z. B. durch eine laserprogrammierte Seriennummer vorgegeben sein, die den Vorteil bietet, daß sie bereits in der Produktion eingefügt werden kann, wodurch Mehrfachvergaben ausgeschlossen sind. Diese gespeicherte Nummer wird bei der Computeranmeldung durch das Transpondersystem übertragen und von der Antenne erfaßt.

Das im Datenträger befindliche Übertragungssystem ist vorzugsweise ein elektromagnetisches Transpondersystem, das durch die Energie der Antenne aktiviert wird und dann den Id-code aussendet

Eine noch höhere Sicherheitsstufe bietet ein Anmeldesystem mit variablem Id-Code, der sich z. B. bei jedem Anmeldevorgang automatisch verändert. Dazu wird zunächst aus einem programmierbaren Speicher, wie oben beschrieben, das Paßwort ausgelesen. Dann erzeugt eine Software im Computer vorzugsweise nach dem Zufallsprinzip ein neues Paßwort, welches von der Antenne zum Datenträger gesendet und in dessen Speicher gespeichert wird. Bei der nächsten Anmeldung wird dieses neue Paßwort mit dem im Computer gespeicherten neuen Paßwort verglichen. Ein zwischenzeitlich begangener Mißbrauch kann sofort entdeckt werden, wenn das Paßwort im Datenträger nicht mehr mit dem des Computers übereinstimmt, da der Computer in diesem Falle bereits ein neues anderes Paßwort erzeugt hat. Folgendes Beispiel verdeutlicht die Prozedur:

Sowohl im Datenträger als auch im Computer ist die Zahl 15 gespeichert. Während der Anmeldung wird die Zahl 15 aus dem Speicher im Datenträger ausgelesen und an den Computer übertragen. Nachdem eine Software die beiden Zahlen verglichen hat und bei Übereinstimmung den Zugriff freigegeben hat, wird vom Computer eine neue Zufallszahl, z. B. 82, erzeugt und an den Datenträger übermittelt, in dessen Speicher sie gespeichert wird. Bei der nächsten Anmeldung wird die Zahl 82 im Computer verglichen.

Die erfindungsgemäße Code-Erfassungseinrichtung ist vorzugsweise in eine bestehende Schnittstelle des Computers zusammen mit einem Ein-/Ausgabegerät eingeschleift, so daß keine weitere Schnittstelle für sonstige Anwendungen verloren geht. Die Antenne kann z. B. zusammen mit der Maus, dem Bildschirm oder der Tastatur am Computer angeschlossen sein.

Das erfindungsgemäße Anmeldesystem benötigt den geringsten Platz auf der Arbeitsfläche, wenn die erfindungsgemäße Antenne als integrierter Bestandteil des Computers gebildet ist. Dazu eignet sich insbesondere die Mausunterlage, in der die Antenne einfach untergebracht werden kann. In diesem Fall würde die Mausunterlage an der Mausschnittstelle des Computers angesteckt werden. Die Antenne benötigt somit weder eine zusätzliche Schnittstelle, noch weiteren Platz auf der Arbeitsfläche. Die Maus wird dann z. B. an einem Stecker an der Mausunterlage angesteckt. Somit bietet das Anmeldesystem den Vorteil, daß es einfach nachrüstbar ist und der PC nur durch eine Mausunterlage, eine Software und den Datenträger ergänzt werden muß.

Analog ist eine Lösung denkbar, bei der die Antenne als separates Gerät in die Tastatur- oder Bildschirmschnittstelle eingeschleift ist oder z. B. in einer Spezialtastatur bereits eingebaut ist. Eine Antenne, welche in einem Computermonitor eingebaut ist, wäre ebenfalls möglich.

Die Identifikationsprozedur mittels berührungslosem Datenträger läuft vorzugsweise analog zur Identifikation mittels Paßwort ab. Zur erstmaligen Anmeldung wird das Paßwort zweimal eingegeben bzw. der berührungslose Datenträger zweimal an der Antenne vorbeigeführt. Die Änderung des Paßworts kann z. B. durch das Vorbeiführen des alten berührungslosen Datenträgers gefolgt vom neuen Datenträger durchgeführt werden, usw.

Für Anwendungen, in denen höchste Sicherheit geboten ist, kann zusätzlich zur berührungslosen Identifikation noch eine andere bekannte Anmeldung, wie z. B. die Eingabe eines Paßworts, angewendet werden.

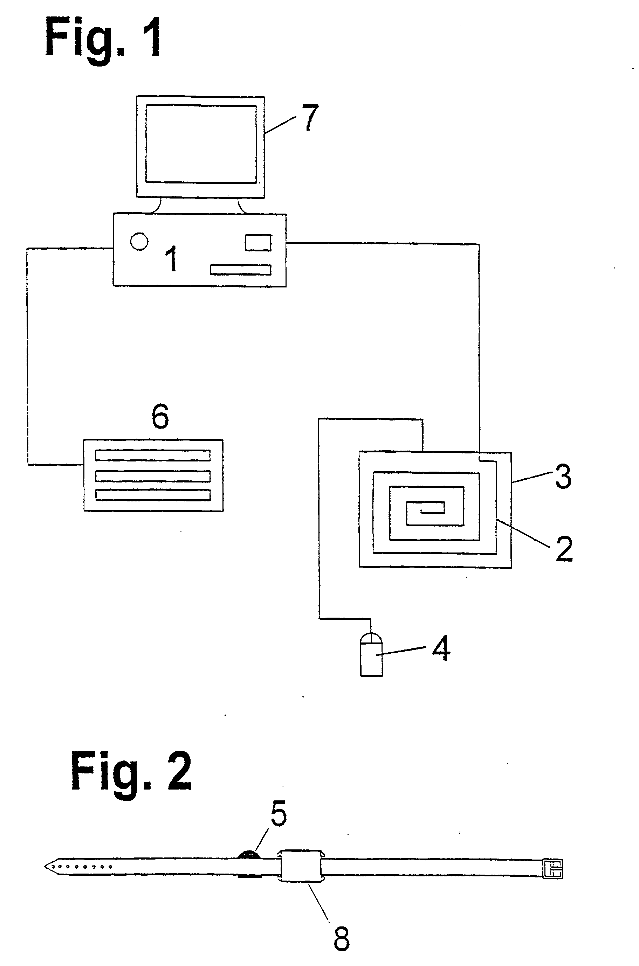

Erfindungsgemäße Ausführungsformen werden im folgenden anhand der Figuren 1 und 2 beispielhaft näher beschrieben. Es zeigen:
- Fig. 1: einen schematischen Aufbau des erfindungsgemäßen Anmeldesystems; und
- Fig. 2: einen am Armband einer Uhr befestigten erfindungsgemäßen Datenträger;

Fig. 1 zeigt eine schematische Darstellung eines Computers 1 mit Ein- und Ausgabegeräten (4, 6, 7), an dem das berührungslose Anmeldesystem installiert ist. Die Antenne 2 befindet sich in einer Mausunterlage 3, die an der Mausschnittstelle des Computers 1 angesteckt ist Die Maus 4 selbst ist mittels Stecker an der Mausunterlage 3 angeschlossen.

Der Datenträger ist am Armband einer Uhr 8 montiert, so daß er bequem mittels einer Handbewegung über die Antenne 2 in der Mausunterlage 3 geführt werden kann. Die Maus 4 ist mittels Stecker an der Mausunterlage angeschlossen.

Durch das Magnetfeld der Antenne 2 wird im Transponder des Datenträgers 5 eine Spannung induziert, worauf die im Speicher befindliche Information ausgelesen und ein Identifikationssignal ausgesendet wird. Dieses Signal wird wiederum von der Antenne 2 in der Mausunterlage 3 empfangen und über die Mausschnittstelle in den Computer 1 übertragen. Damit ist die Anmeldeprozedur abgeschlossen.

Die Antenne kann z. B. auch in einer Spezialtastatur 6 oder in dem Computermonitor 7 eingebaut sein. Der Datenträger 5 müßte dann in die Nähe dieser Geräte gebracht werden, um eine Anmeldung durchzuführen.

Die Erfindung ermöglicht somit eine berührungslose Identifikation eines Benutzers durch einfache, bequeme Übertragung eines Paßworts und bietet höchste Sicherheit.

## Patentansprüche

1. Anmeldesystem für Computer mit
- einem Datenträger (5), der einen Identifikationscode enthält,
- einer Code-Erfassungseinrichtung (2) zur Erfassung des Codes, und
- einer Sendeeinrichtung, die ein Identifikationssignal an die Erfassungseinrichtung (2) aussendet,
wobei die Sendeeinrichtung Teil eines Transpondersystems ist,
**dadurch gekennzeichnet, daß**
- die Erfassungseinrichtung (2) in einer Mausunterlage (3) angeordnet und in die Mausschnittstelle des Computers (1) eingeschleift ist.

2. Anmeldesystem nach Anspruch 1,
**dadurch gekennzeichnet, daß**
der Datenträger (5) einen Speicher mit laserprogrammierter Seriennummer erfaßt.

3. Anmeldesystem nach Anspruch 1,
**dadurch gekennzeichnet, daß**
eine Maus (4) an der Mausunterlage (3) angeschlossen ist.

4. Anmeldesystem nach Anspruch 1,
**dadurch gekennzeichnet, daß**
der Datenträger (5) in oder an einer Uhr (8) montiert ist.

5. Verfahren zur Identifikation des Benutzers an Computem, umfassend folgende Schritte:
- Senden eines in einem Datenträger (5) gespeicherten Identifikationscodes mittels einer Sendeeinrichtung, die Teil eines Transpondersystems ist,
- Empfangen des tdentifikationscodes mittels einer Erfassungseinrichtung (2), die in einer Mausunterlage (3) angeordnet ist,
- Übertragen des empfangenen Identifikationscodes über die Mausschnittstelle des Computers (1) in den Computer,
- Erzeugen eines neuen Identifikationscodes bei jeder Anmeldung in dem Computer (1), und
- Speichern des neuen Identifikationscodes auf dem Speichermedium des Datenträgers (5).

## Claims

1. Log-on system for computers with
- a data carrier (5) containing an identification code,
- a code detecting device (2) for detecting the code, and
- a transmitter device transmitting an identification signal to the detecting device (2),
the transmitter device being part of a transponder system,
**characterised in that**
- the detecting device (2) is arranged in a mouse mat (3) and is looped into the mouse interface of the computer (1).

2. Log-on system according to claim 1, **characterised in that** the data carrier (5) detects a memory with laser-programmed serial number.

3. Log-on system according to claim 1, **characterised in that** a mouse (4) is connected to the mouse mat (3).

4. Log-on system according to claim 1, **characterised in that** the data carrier (5) is mounted in or on a watch (8).

5. Process for identifying the computer user, comprising the following steps:
- transmitting an identification code stored in a data carrier (5) by means of a transmitter device which is part of a transponder system,
- receiving the identification code by means of a detecting device (2) which is arranged in a mouse mat (3),
- transmitting the received identification code via the mouse interface of the computer (1) into the computer,
- producing a new identification code for every log-on to the computer (1), and
- storing the new identification code on the storage medium of the data carrier (5).

## Revendications

1. Système de demande pour ordinateur comportant
- un support de données (5), qui contient un code d'identification,
- un dispositif de détection de code (2) pour détecter le code, et
- un dispositif d'émission, qui envoie un signal d'identification au dispositif de détection (2),
le dispositif d'émission faisant partie d'un système de transpondeur,
**caractérisé en ce que**
- le dispositif de détection (2) est disposé dans un support de souris (3) et est inséré en boucle dans l'interface de souris de l'ordinateur (1).

2. Système de demande selon la revendication 1,
**caractérisé en ce que** le support de données (5) contient une mémoire comportant un numéro de série programmé par laser.

3. Système de demande selon la revendication 1,
**caractérisé en ce qu'**une souris (4) est raccordée au support de souris (3).

4. Système de demande selon la revendication 1,
**caractérisé en ce que** le support de données (5) est monté dans ou sur une montre (8).

5. Procédé pour identifier l'utilisateur dans des ordinateurs, comprenant les étapes suivantes :
- émission d'un code d'identification mémorisé dans un support de données (40), au moyen d'un dispositif d'émission, qui fait partie d'un système de transpondeur,
- réception du code d'identification au moyen d'un dispositif de détection (2), qui est disposé dans un support de souris (3),
- transmission du code d'identification reçu par l'intermédiaire de l'interface de souris de l'ordinateur (1), dans l'ordinateur,
- production d'un nouveau code d'identification lors de chaque demande dans l'ordinateur (1), et
- mémorisation du nouveau code d'identification dans le milieu de mémoire du support de données (5).
